# EUROPEAN PATENT APPLICATION

(11) **EP 4 585 377 A1**
(43) Date of publication of application: **16.07.2025**
(21) Application number: 23862985.1
(22) Date of filing: 28.08.2023
(51) Int. Cl.: B25J 19/00, F16B 2/08, F16B 7/04, F16L 3/10, F16L 3/24, H02G 3/32

(54) **FIXTURE, AND METHOD FOR USING FIXTURE**

(30) Priority: 09.09.2022 JP 2022143969
(71) Applicant: Tsubakimoto Chain Co., Osaka-shi, Osaka 530-0005 (JP)
(72) Inventor: KUROOKA, Hiroki, Osaka-shi, Osaka 530-0005 (JP); SHINOBU, Keiko, Osaka-shi, Osaka 530-0005 (JP); TAMIYA, Atsuhiro, Osaka-shi, Osaka 530-0005 (JP); SONODA, Ayano, Osaka-shi, Osaka 530-0005 (JP); ISHIKAWA, Masayuki, Osaka-shi, Osaka 530-0005 (JP)
(74) Representative: Neumann, Ditmar
(86) International application number: PCT/JP2023/030906
(87) International publication number: WO 2024/053446

(57) **Abstract**

A fixing device (10) includes a fastener (11) and a coupling mechanism (14). The fastener (11) extends in a circumferential direction of an outer circumferential surface of a first object and designed to be fastened to the first object. The coupling mechanism (14) couples the fastener to a bracket. The coupling mechanism (14) includes a base member (20) attachable to the bracket, and a transmission member (30) arranged between the fastener and the first object. Two base portions (20) and two transmission members (30) are arranged in a width direction (Z).

## Description

### TECHNICAL FIELD

The present disclosure relates to a fixing device and a method for using a fixing device.

### BACKGROUND ART

Patent Literature 1 discloses a wiring guide employed in an apparatus that includes a robotic arm and wires arranged along the robotic arm so that the robotic arm and the wires are fixed to each other.

The wiring guide includes two semi-circular rings, a movable guide that clamps the entire outer circumferential surfaces of the two semi-circular rings, and a support fixing portion that pivotally couples the movable guide. The entirety of the two semi-circular rings is substantially ring-shaped. The two semi-circular rings each have a hole through which the wire is inserted.

The support fixing portion includes a coupling support that is couplable to the movable guide. The support fixing portion further includes two binding pieces with inner surfaces extending in the circumferential direction of the robotic arm from the coupling support. The coupling support has a band insertion hole through which a cable tie is inserted. The support fixing portion is fixed to the robotic arm by wrapping the cable tie around the outer circumferential surface of the robotic arm and the two binding pieces, with the inner surfaces of the two binding pieces in contact with the outer circumferential surface of the robotic arm.

### CITATION LIST

### Patent Literature

Patent Literature 1: Japanese Laid-Open Patent Publication No. 2021-133447 SUMMARY OF INVENTION

### Technical Problem

Since the inner diameters of the two semi-circular rings are constant, it is difficult to employ the wiring guide of Patent Literature 1 in a wire having an outer diameter that is different from the inner diameter of each semi-circular ring. Since the curvature radius of the inner surface of each binding piece is constant, it is difficult to fix the support fixing portion to a robotic arm that has an outer circumferential surface having a curvature radius different from that of the inner surface.

### Solution to Problem

The aspects of the fixing device and the method for using the fixing device that solve the above-described problem will now be described.

### [Aspect 1]

A fixing device is employed in an apparatus including an elongated first object and an elongated second object arranged along the first object. The fixing device fixes the first object to the second object by being attached to a bracket fixed to the second object. The fixing device includes a fastener extending in a circumferential direction of an outer circumferential surface of the first object and designed to be fastened to the first object, and a coupling mechanism that couples the bracket to the fastener. A direction that is orthogonal to an extending direction of the first object and an arrangement direction of the bracket and the fastener is referred to as a width direction. The coupling mechanism includes a base portion attachable to the bracket, and an intermediate portion arranged between the fastener and the first object. The base portion is one of multiple base portions arranged in the width direction, the intermediate portion is one of multiple intermediate portions arranged in the width direction, or both the base portions and the intermediate portions are arranged in the width direction.

In this configuration, the fastener is fastened to the elongated first object, and the bracket is fixed to the elongated second object. The fastener and the bracket are coupled to each other by the coupling mechanism. As a result, the first object and the second object are fixed to each other by the fastener, the coupling mechanism, and the bracket.

### [Aspect 2]

In the fixing device according to aspect 1, the base portion is one base portion arranged in the width direction and the intermediate portion is one of multiple intermediate portions arranged in the width direction. The intermediate portions are pivotally attached to the base portion.

If there are multiple base portions, accurately positioning each base portion requires considerable effort. In the above-described configuration, there is only one base portion. Thus, accurately positioning the base portion becomes easier. Further, the intermediate portions are pivotally attached to the base portion. Therefore, the intermediate portions readily extend along the outer circumferential surface of the first object. As a result, the fastening force of the fastener acts more easily in the radial direction on the first object through the intermediate portions. This allows the fastener to further increase the force used to hold the first object.

### [Aspect 3]

In the fixing device according to aspect 1, the base portion is one of multiple base portions arranged in the width direction and the intermediate portion is one of multiple intermediate portions arranged in the width direction. A distance between the base portions in the width direction and a distance between the intermediate portions in the width direction are adjustable.

This configuration allows the bracket having a size corresponding to the size of the second object in the width direction to be attached to the base portions. Further, this configuration allows the distance between the intermediate portions to be changed in proportion to the size of the first object in the width direction. Accordingly, this configuration allows the fixing device to be employed in the first object, which varies in size in the width direction, and allows the fixing device to be employed in the second object, which varies in size in the width direction.

### [Aspect 4]

In the fixing device according to aspect 2, the base portion is a base member including an attachment attachable to the bracket in a removable manner, two arms spaced apart from each other in the extending direction, and a coupling shaft that extends in the extending direction and couples the arms to each other. The intermediate portions are transmission members supported by the coupling shaft. The transmission members are configured to transmit a fastening force of the fastener to the outer circumferential surface of the first object.

In this configuration, the fastener presses the transmission members from the outer circumferential side. As a result, the fastening force of the fastener acts in the radial direction on the first object through the transmission members. This allows the fastener to increase the force used to hold the first object.

### [Aspect 5]

In the fixing device according to any one of aspects 1 to 4, the base portion includes an attachment that is attachable to the bracket in a removable manner. The base portion is configured to allow a position of the attachment to be changed relative to the intermediate portion in the arrangement direction.

In this configuration, the distance between the first object and the second object in the arrangement direction can be changed by changing the position of the attachment relative to the intermediate portion in the arrangement direction.

### [Aspect 6]

A method for using the fixing device according to any one of aspects 1 to 5 includes setting, when the base portion is one of multiple base portions arranged in the width direction, a distance between the base portions in proportion to a size of the bracket in the width direction, and setting, when the intermediate portion is one of multiple intermediate portions arranged in the width direction, a distance between the intermediate portions in proportion to a size of the first object in the width direction.

The method achieves operational advantages similar to those in the fixing device according to any one of aspects 1 to 5.

### Advantageous Effects of Invention

The present disclosure allows a fixing device to be employed in objects that vary in size.

### BRIEF DESCRIPTION OF DRAWINGS

Fig. 1 is a side view of a fixing device according to a first embodiment in a state in which a first object and a second object are fixed to each other.
Fig. 2 is a front view of the fixing device and the bracket shown in Fig. 1.
Fig. 3 is an exploded perspective view of the fixing device and the bracket shown in Fig. 2.
Fig. 4 is a cross-sectional view along line 4-4 of Fig. 1.
Fig. 5A is a front view illustrating a state in which a small-sized first object and a small-sized second object are fixed to each other by the fixing device shown in Fig. 1.
Fig. 5B is a front view illustrating a state in which a large-sized first object and a large-sized second object are fixed to each other by the fixing device shown in Fig. 1.
Fig. 6 is a perspective view of the fixing device and the bracket according to a second embodiment.
Fig. 7 is a front view of the fixing device and the bracket of the second embodiment.
Fig. 8 is a front view of the fixing device and the bracket according to a first modification.
Fig. 9 is a front view of the fixing device and the bracket according to a second modification.
Figs. 10A and 10B are front views of the fixing device and the bracket according to a third modification.
Fig. 11 is an exploded perspective view of the fixing device and the bracket according to a fourth modification.
Fig. 12 is a front view of the fixing device and the bracket according to the fourth modification.

### DESCRIPTION OF EMBODIMENTS

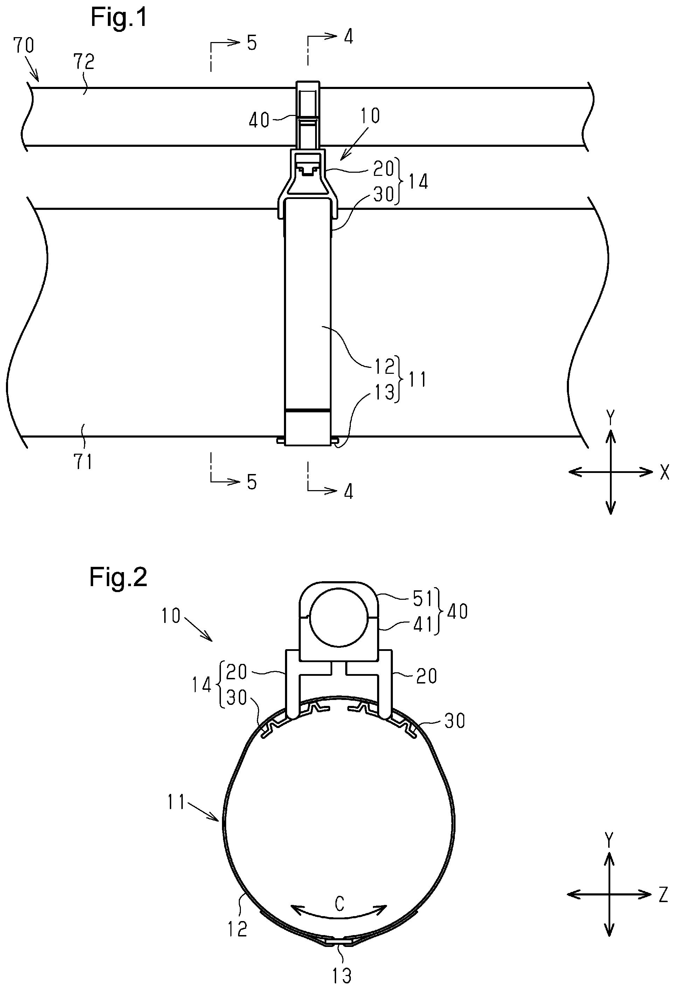

A fixing device and a method for using a fixing device according to a first embodiment will now be described with reference to Figs. 1 to 5B.

### First Embodiment

As shown in Fig. 1, a fixing device 10 is employed in an apparatus 70 that includes an elongated first object 71 and an elongated second object 72. The second object 72 is arranged along the first object 71.

The first object 71 is, for example, a robotic arm with a substantially circular cross-section. The second object 72 is, for example, a cable with a substantially circular cross-section.

The fixing device 10 fixes the first object 71 to the second object 72 by being mounted on a bracket 40 fixed to the second object 72. The fixing device 10 and the bracket 40 form a fixing device that fixes the first object 71 to the second object 72.

Hereinafter, the extending direction of the first object 71 (left-right direction in Fig. 1) is referred to as the extending direction X. The arrangement direction of the bracket 40 and the fastener 11 (up-down direction in Fig. 1) is referred to as the arrangement direction Y. The direction orthogonal to the extending direction X and the arrangement direction Y is referred to as the width direction Z.

The configurations of the fixing device 10 and the bracket 40 will now be described in detail.

### Fixing Device 10

As shown in Figs. 1 and 2, the fixing device 10 includes a fastener 11 that extends in a circumferential direction C of the outer circumferential surface of the first object 71 and is designed to be fastened to the first object 71, and a coupling mechanism 14 that couples the bracket 40 to the fastener 11.

### Fastener 11

As shown in Figs. 1 and 2, the fastener 11 includes a band 12 and a buckle 13.

A hook (not shown) is provided on the end of one surface of the band 12, and a loop (not shown) is provided on a portion continuous with the end. The hook and the loop form a hook-and-loop fastener.

As shown in Fig. 2, the opposite ends of the band 12 are respectively inserted through holes (not shown) of the buckle 13 and folded back onto the outer circumferential surface of the band 12. As a result, the overlapping portions of the band 12 are coupled to each other in a removable manner by the feature of the hook-and-loop fastener.

### Coupling Mechanism 14

As shown in Figs. 1 to 3, the coupling mechanism 14 includes two base members 20, which serve as examples of base portions attachable to the bracket 40, and two transmission members 30, which serve as examples of intermediate portions located between the fastener 11 and the first object 71.

### Base Member 20

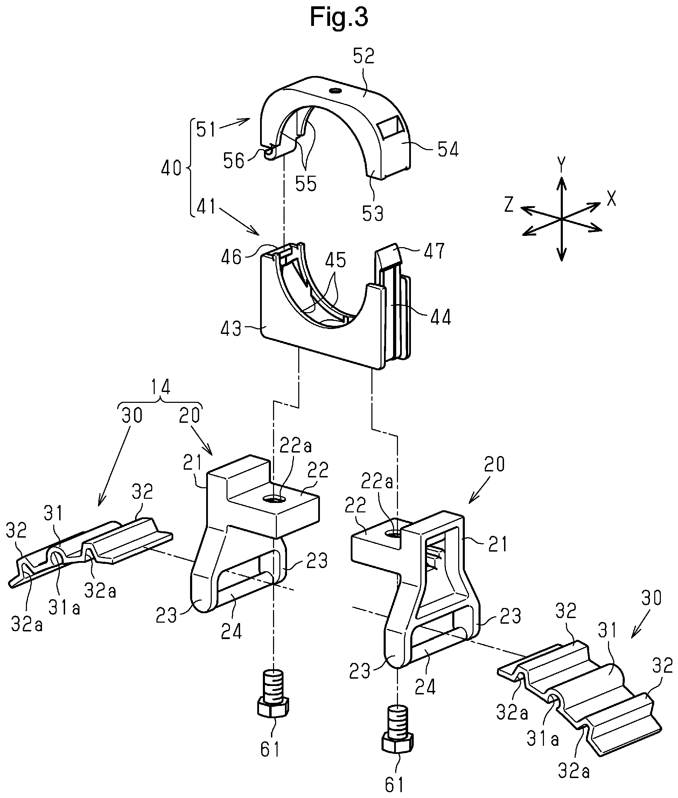

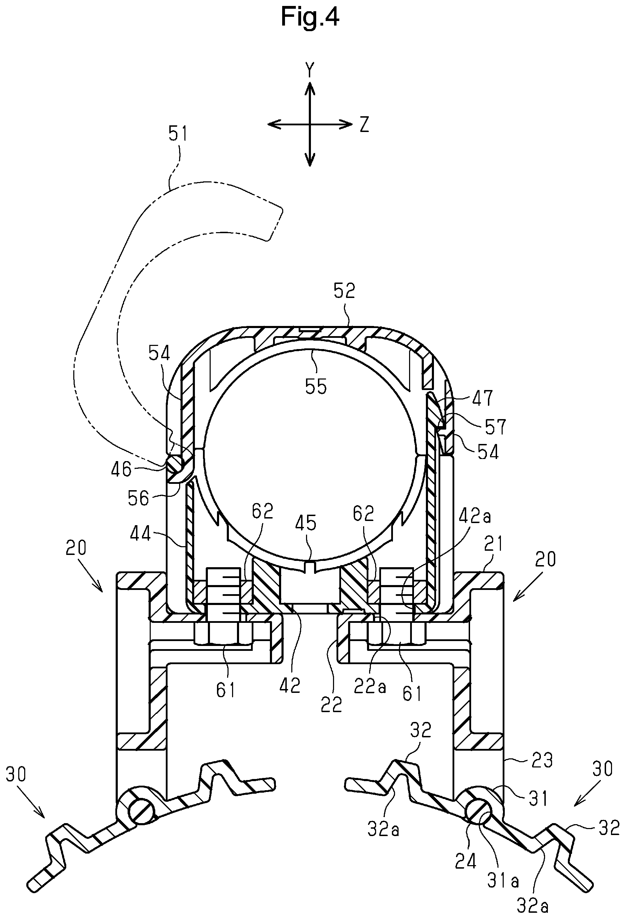

As shown in Figs. 3 and 4, the two base members 20 are arranged to be symmetrical with respect to a plane of symmetry orthogonal to the width direction Z. Therefore, the configuration of one of the base members 20 will be hereinafter described, and the configuration of the other will not be described.

The base member 20 of the first embodiment has a shape that is symmetrical with respect to a plane of symmetry orthogonal to the extending direction X. Therefore, the two base members 20 have the same shape.

Each base member 20 includes a body 21, an attachment 22 attachable to the bracket 40 in a removable manner, two arms 23 spaced apart from each other in the extending direction X, and a coupling shaft 24 that extends in the extending direction X and couples the arms 23 to each other.

The body 21 extends in the arrangement direction Y and is adjacent to the bracket 40 in the width direction Z.

The attachment 22 of one base member 20 protrudes from the middle of the body 21 in the arrangement direction Y toward the other base member 20 in the width direction Z. A hole 22a extends through the attachment 22 in the arrangement direction Y.

The two arms 23 protrude from the body 21 toward the fastener 11 in the arrangement direction Y. The distance between the arms 23 is greater than the length of the band 12 in the extending direction X and the length of the transmission member 30, which will be described later.

The base member 20 is formed from, for example, a rigid resin material.

The two base members 20 are configured such that the distance between them in the width direction Z is adjustable.

### Transmission Member 30

As shown in Figs. 3 and 4, the two transmission members 30 have the same shape. The two transmission members 30 are arranged to be symmetric with respect to a plane of symmetry that is orthogonal to the width direction Z. Therefore, the configuration of one of the transmission members 30 will be hereinafter described, and the configuration of the other will not be described.

The transmission member 30 has the form of a thin plate that extends in the circumferential direction C. The length of the entire transmission member 30 in the extending direction X is constant in the circumferential direction C.

A first protrusion 31 is provided at the middle of the transmission member 30 in the circumferential direction C. The first protrusion 31 protrudes outward and extends in the extending direction X. Second protrusions 32 are respectively arranged on the opposite sides of the first protrusion 31 in the circumferential direction C. The second protrusions 32 protrude outward and extend in the extending direction X.

The portion of the inner circumferential surface of the transmission member 30 corresponding to the first protrusion 31 has a first groove 31a extending in the extending direction X.

The first groove 31a has an arcuate cross-section. A coupling shaft 24 is fitted into the first groove 31a. The transmission member 30 is pivotally supported around the axis of the coupling shaft 24.

The transmission member 30 is attached to the base member 20 by inserting the coupling shaft 24 of the base member 20 into the first groove 31a of the transmission member 30.

The portions of the inner circumferential surface of the transmission member 30 corresponding to the second protrusions 32 have two second grooves 32a, respectively. The second grooves 32a extend in the extending direction X.

The transmission member 30 is formed from a flexible resin material. The transmission member 30 is preferably formed from a viscoelastic material. That is, the transmission member 30 preferably has viscoelasticity. Examples of the viscoelastic material include elastomers. The viscoelasticity of the transmission member 30 reduces the likelihood of the transmission member 30 slipping relative to the first object 71.

The transmission member 30 is configured to transmit a fastening force of the fastener 11 to the outer circumferential surface of the first object 71. The transmission member 30 includes three protrusions, namely, the first protrusion 31 and the two second protrusions 32. This allows the fastening force of the fastener 11 to be distributed properly and transmitted to the outer circumferential surface of the first object 71.

The two transmission members 30 are configured such that the distance between them in the width direction Z are adjustable.

### Bracket 40

As shown in Figs. 3 and 4, the bracket 40 includes a first member 41 that is attachable to the attachments 22 of the two base members 20, and a second member 51 that is pivotally attachable to the first member 41.

The second member 51 is provided on the side opposite to the attachment 22 (the upper side in Figs. 3 and 4) from the first member 41 in the arrangement direction Y.

### First Member 41

As shown in Figs. 3 and 4, the first member 41 includes a bottom wall 42, two first side walls 43, and two second side walls 44.

The bottom wall 42 has the form of a substantially rectangular plate having two long sides extending in the width direction Z and two short sides extending in the extending direction X. The bottom wall 42 is in contact with the two attachments 22.

The two first side walls 43 extend, on the side opposite to the attachment 22, in the arrangement direction Y from two edges respectively corresponding to the two long sides of the bottom wall 42.

The two second side walls 44 extend, on the side opposite to the attachment 22, in the arrangement direction Y from two edges respectively corresponding to the two short sides of the bottom wall 42.

Two holes 42a extend through the bottom wall 42 in the arrangement direction Y, and are spaced apart from each other in the width direction Z.

The first member 41 is attached to the two attachments 22 by respectively inserting bolts 61 through the holes 22a of the two attachments 22 and the two holes 42a of the bottom wall 42 and respectively fastening nuts 62 to the bolts 61.

The two first side walls 43 each include a first support 45. The first support 45 has a semi-circular recessed shape and supports the outer circumferential surface of the second object 72.

A shaft portion 46 is arranged outside one (left in Figs. 3 and 4) second side wall 44 in the width direction Z to couple the two first side walls 43 to each other.

A first engagement portion 47 is arranged outside the other (right in Figs. 3 and 4) second side wall 44. The first engagement portion 47 includes a tab. The tab protrudes toward the second member 51 from the first side walls 43 in the arrangement direction Y.

### Second Member 51

As shown in Figs. 3 and 4, the second member 51 includes a top wall 52 facing the bottom wall 42 in the arrangement direction Y. The second member 51 further includes two first side walls 53 and two second side walls 54, each being continuous with the top wall 52 and extending in the arrangement direction Y.

The two first side walls 53 face each other in the extending direction X. The two second side walls 54 face each other in the width direction Z.

The two first side walls 53 each include a second support 55. The second support 55 has a semi-circular recessed shape and supports the outer circumferential surface of the second object 72. The first support 45 and the second support 55 define a substantially circular support hole.

A bearing 56 is provided at the edge of one second side wall 54. The bearing 56 is pivotally supported by engaging with the shaft portion 46 of the first member 41. The second member 51 is pivotable with respect to the first member 41 about the axis of the shaft portion 46.

The other second side wall 54 includes a second engagement portion 57 that is engageable with the first engagement portion 47. The second engagement portion 57 of the first embodiment is a projection engageable with the tab of the first engagement portion 47. The pivoting of the second member 51 with respect to the first member 41 is restricted when the first engagement portion 47 is engaged with the second engagement portion 57.

The operation of the first embodiment will now be described.

The fastener 11 is fastened to the elongated first object 71, and the bracket 40 is fixed to the elongated second object 72. The fastener 11 and the bracket 40 are coupled to each other by the coupling mechanism 14. As a result, the first object 71 and the second object 72 are fixed to each other by the fastener 11, the coupling mechanism 14, and the bracket 40.

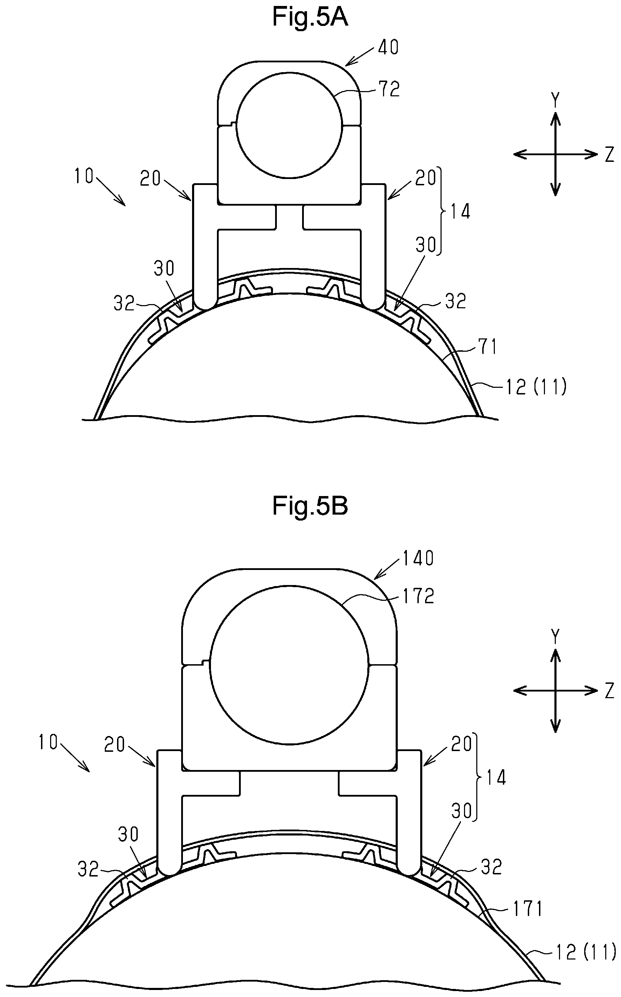

As shown in Fig. 5A, when the size of the bracket 40 in the width direction Z, specifically, the size of the second object 72, is relatively small, the distance between the base members 20 is set to be relatively small.

As shown in Fig. 5B, when the size of a bracket 140 in the width direction Z, specifically, the size of a second object 172, is relatively large, the distance between the base members 20 is set to be relatively large.

Thus, since two base members 20 are provided in the width direction Z, the distance between the base members 20 is adjustable in proportion to the size of the bracket 40 (140) in the width direction Z, specifically, the size of the second object 72 (172). This allows the bracket 40 (140) having a size corresponding to the size of the second object 72 (172) in the width direction Z to be attached to the base members 20.

Further, two transmission members 30 are provided in the width direction Z. This allows the distance between the transmission members 30 to be changed in proportion to the size of the first object 71 (171) in the width direction Z. Such a configuration allows the first objects 71 (171), which varies in size in the width direction Z, to be fastened to the transmission members 30.

The first embodiment has the advantages described below.

(1-1) In the fixing device 10, two base members 20 and two transmission members 30 are provided in the width direction Z. The two base members 20 are configured such that the distance between them in the width direction Z is adjustable. The two transmission members 30 are configured such that the distance between them in the width direction Z is adjustable.

This configuration, which operates in the above-described manner, allows the fixing device 10 to be employed in the first object 71, which varies in size in the width direction Z, and allows the fixing device 10 to be employed in the second object 72, which varies in size in the width direction Z.

(1-2) The transmission member 30 is supported by the coupling shaft 24 of the base member 20 and is configured to transmit a fastening force of the fastener 11 to the outer circumferential surface of the first object 71.

In this configuration, the transmission member 30 is supported by the coupling shaft 24 and arranged between the first object 71 and the fastener 11. Thus, the fastener 11 presses the transmission member 30 from the outer circumferential side. As a result, the fastening force of the fastener 11 acts in the radial direction on the first object 71 through the transmission member 30. This allows the fastener 11 to increase the force used to hold the first object 71.

(1-3) The transmission member 30 extends in the circumferential direction C and is pivotally supported around the axis of the coupling shaft 24.

In this configuration, when the transmission member 30 pivots about the axis of the coupling shaft 24, the transmission member 30 readily extends along the outer circumferential surface of the first object 71. As a result, the fastening force of the fastener 11 acts more easily in the radial direction on the first object 71 through the transmission member 30. This allows the fastener 11 to further increase the force used to hold the first object 71.
(1-4) The transmission member 30 is flexible. Thus, the transmission member 30 flexibly deforms along the outer circumferential surface of the first object 71. This allows the fastener 11 to further increase the force used to hold the first object 71.
(1-5) The method for using the fixing device 10 includes setting the distance between the base members 20 in proportion to the size of the bracket 40 in the width direction Z, and setting the distance between the transmission members 30 in proportion to the size of the first object 71 in the width direction Z.

This method achieves an advantage equivalent to the above-described advantage (1).

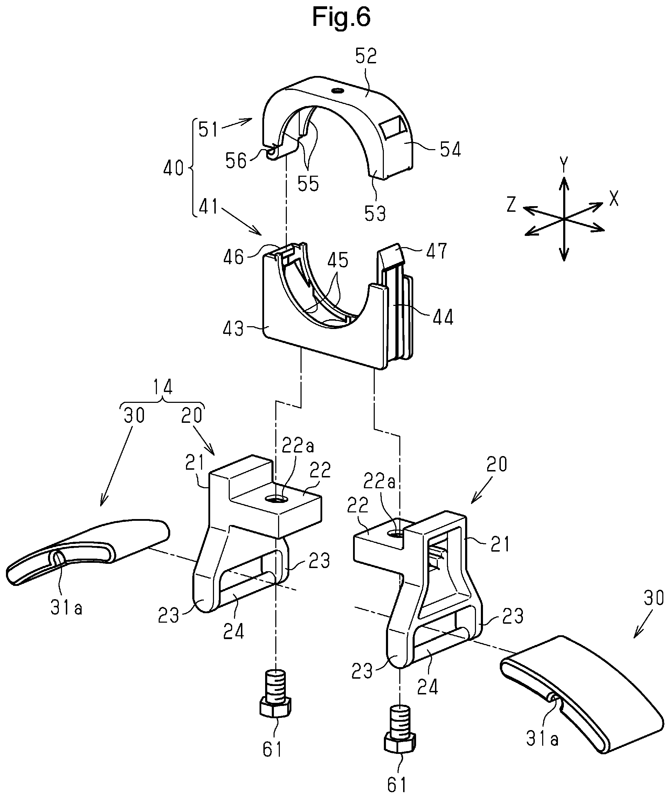

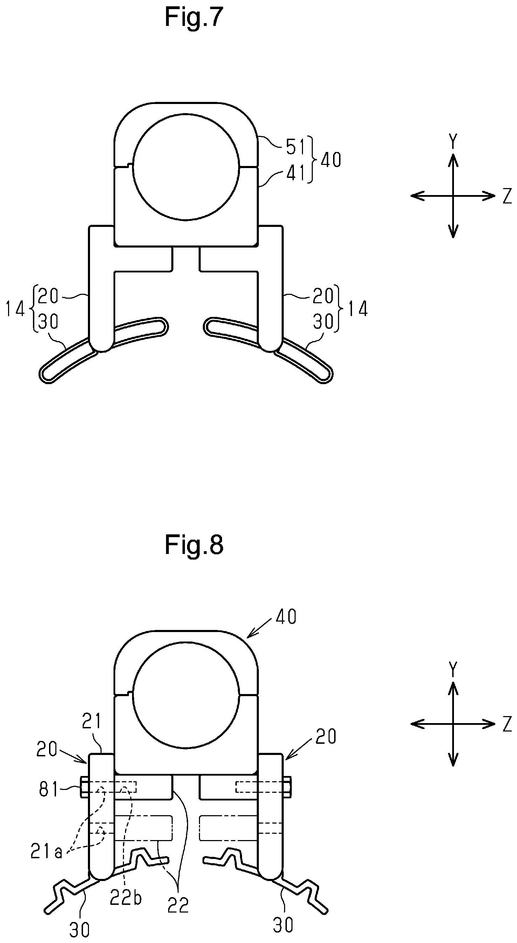

The fixing device and the method for using the fixing device according to a second embodiment will now be described with reference to Figs. 6 and 7. In the fixing device 10 of the second embodiment, the shape of the transmission member 30 differs from that in the first embodiment.

### Second Embodiment

As shown in Figs. 6 and 7, the transmission member 30 of the second embodiment has the form of a thin plate. The transmission member 30 has a rectangular shape in plan view. The transmission member 30 extends in the longitudinal direction while being slightly curved in the thickness direction.

Referring to Figs. 1 and 2, when the fixing device 10 is employed in the apparatus 70, which includes the elongated first object 71 and the elongated second object 72 arranged along the first object 71, the transmission member 30 extends in the circumferential direction C.

The length of the transmission member 30 in the circumferential direction C is constant. The thickness of the transmission member 30, which is orthogonal to the circumferential direction C, is constant. The exterior surface of the transmission member 30, which is a curved outer surface on the outer circumferential side, is a curved surface extending in the circumferential direction C. The interior surface of the transmission member 30, which is a curved inner surface on the outer circumferential side, is a curved surface extending in the circumferential direction C.

The first groove 31a, which extends in the extending direction X, is provided on the inner circumferential surface of the transmission member 30 at the middle of the transmission member 30 in the longitudinal direction. The transmission member 30 is pivotally attached to the base member 20 by inserting the coupling shaft 24 of the base member 20 into the first groove 31a of the transmission member 30. That is, the intermediate portion is pivotally attached to the base portion.

The transmission member 30 may include a second groove 32a in addition to the first groove 31a. That is, the inner circumferential surface of the transmission member 30 may have the second groove 32a at a position different from that of the first groove 31a.

The operation and advantages of the second embodiment will now be described.
(2-1) The transmission member 30 is pivotally attached to the base member 20. Therefore, the transmission member 30 readily extends along the outer circumferential surface of the first object 71. As a result, the fastening force of the fastener 11 acts more easily in the radial direction on the first object 71 through the transmission member 30. This allows the fastener 11 to further increase the force used to hold the first object 71. Additionally, the transmission member 30 readily extends along the exterior surface of the first object 71, which varies in size.
(2-2) The exterior surface and the inner circumferential surface of the transmission member 30 are curved surfaces extending in the circumferential direction C. This facilitates the fastening force of the fastener 11 acting uniformly on the first object 71.

### Modifications

The first and second embodiments (hereinafter also referred to as the present embodiments) may be modified as follows. The present embodiments and the following modifications can be combined as long as they remain technically consistent with each other.

The fastener 11 does not have to include the buckle 13 or a hook-and-loop fastener. For example, the fastener may be a hose band or a cable tie.

The first object 71 is not limited to a robotic arm. The second object 72 is not limited to a cable. As long as the first object and the second object are elongated, the fixing device may be employed in other objects in addition to robotic arms and cables.

For example, as illustrated in a first modification shown in Fig. 8, the body 21 and the attachment 22 of the base member 20 may be separate components. In this case, multiple holes 21a extending through the body 21 in the width direction Z are spaced apart from each other in the arrangement direction Y. Additionally, the attachment 22 includes an internal thread 22b that extends in the width direction Z. The attachment 22 is fixed to the body 21 by inserting a screw 81 into one of the holes 21a and fastened into the internal thread 22b of the attachment 22.

In this configuration, the position of the attachment 22 relative to the transmission member 30 in the arrangement direction Y can be changed by selecting one of the holes 21a, through which the screw 81 is inserted. This allows the distance between the first object 71 and the second object 72 in the arrangement direction Y to be changed.

The method for fixing the attachment 22 to the body 21 is not limited to fastening with the screws 81 and may also be a snap-fit.

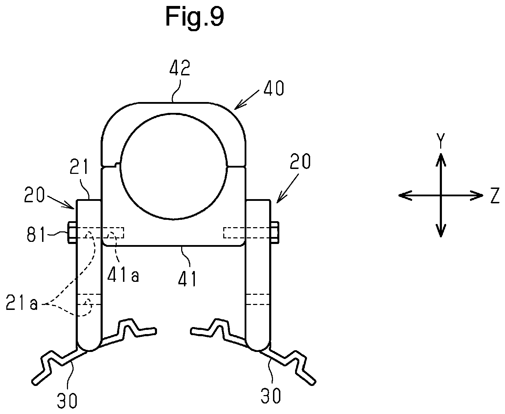

For example, as illustrated in a second modification shown in Fig. 9, the attachment 22, which protrudes from the body 21 in the width direction Z, may be omitted. In this case, the hole 21a extending through the body 21 in the width direction Z forms an attachment. The body 21 includes multiple holes 21a that are spaced apart from each other in the arrangement direction Y. Additionally, the first member 41 of the bracket 40 includes an internal thread 41a extending in the width direction Z. A screw 81 is inserted into one of the holes 21a, and the internal thread 41a of the first member 41 is fastened into the hole.

This configuration achieves operational advantages similar to those in the first modification.

The method for fixing the bracket 40 to the body 21 is not limited to fastening with the screws 81 and may also be a snap-fit.

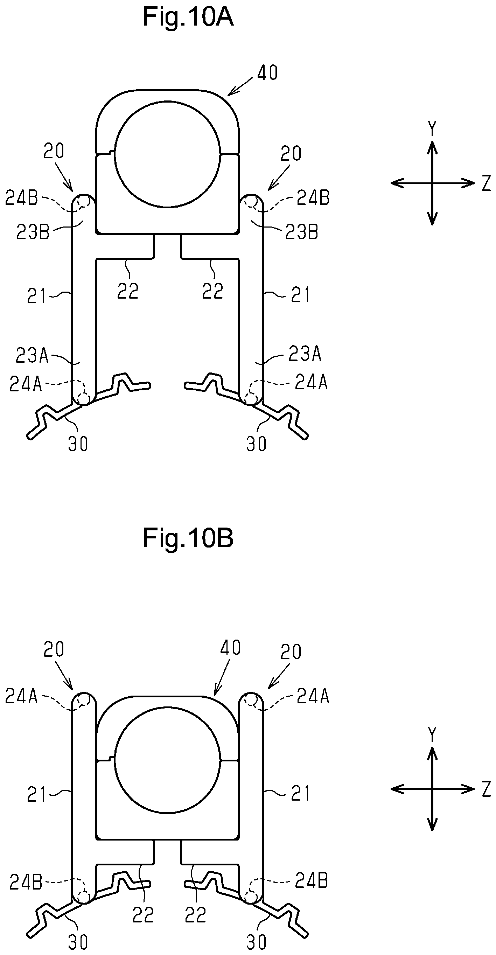

For example, as illustrated in a third modification shown in Figs. 10A and 10B, the base member 20 may include two coupling shafts 24A and two coupling shafts 24B. In this case, the body 21 includes two pairs of arms 23A and 23B.

As shown in Fig. 10A, a pair of arms 23A protrudes from the body 21 toward the fastener 11 (downward in the figure) in the arrangement direction Y. The other pair of arms 23B protrudes from the body 21 in the direction opposite to the pair of arms 23A (upward in the figure) in the arrangement direction Y. A coupling shaft 24A is provided between the arms 23A. A coupling shaft 24B is provided between the arms 23B. Additionally, each attachment 22 is provided at a position closer to the coupling shaft 24B than the center of the body 21 in the arrangement direction Y.

This configuration allows, as shown in Fig. 10B, the base member 20 to be reversed in the arrangement direction Y. In such a case, the positions of the attachments 22 in the arrangement direction Y are closer to the transmission members 30 compared to those in Fig. 10A. This allows the distance between the first object 71 and the second object 72 in the arrangement direction Y to be changed according to the orientation of the base member 20.

Specifically, in the first to third modifications, the base member 20 is configured to allow the position of the attachment relative to the transmission member 30 to be changed in the arrangement direction Y.

As shown in Fig. 3, in the present embodiments, one hole 22a extends through the attachment 22 of the base member 20 in the arrangement direction Y. Instead, there may be multiple holes 22a extending through the attachment 22 of the base member 20 in the arrangement direction Y. The bottom wall 42 of the first member 41 may have multiple holes 42a. Multiple bolts 61 that have been respectively inserted through multiple holes 22a can be inserted through the holes 42a. In this modification, the holes 22a extending through the attachment 22 of the base member 20 in the arrangement direction Y limits the rotation of the base member 20 relative to the first member 41. This facilitates the positioning of the base member 20 with respect to the first member 41.

In the above-described embodiments and the modifications, the transmission member 30 includes one first groove 31a and two second grooves 32a. Instead, the two second grooves 32a may be replaced with one first groove 31a. In this case, the coupling shaft 24 may be fitted into any one of the three first grooves 31a in proportion to the size of the first object 71 in the width direction Z.

As long as the transmission member 30 includes at least one first groove 31a, the number of the second grooves 32a may be varied or the second grooves 32a may be omitted. That is, the number of second protrusions 32 is not limited to two; there may be three or more second protrusions 32, or only one second protrusion 32. The second protrusions 32 may be omitted.

It is preferred that the transmission member 30 be pivotally supported around the axis of the coupling shaft 24. It is preferred that the transmission member 30 be flexible. When the transmission member 30 is flexible, the transmission member 30 may be formed from a material other than resin materials, such as rubber or metal materials. Additionally, the transmission member 30 does not have to extend in the circumferential direction C in its natural state, in which no fastening force is applied by the fastener 11. The transmission member may have a substantially flat shape in its natural state and deform elastically to curve in the circumferential direction C when fastened by the fastener 11.

The transmission member 30 may be fixed to the coupling shaft 24 so as to prevent pivoting.

The transmission member 30 may be omitted. In this case, the coupling shaft 24 of the base member 20 acts as the intermediate portion, while the components of the base member 20 other than the coupling shaft 24 act as the base portion.

In the above-described embodiments and modifications, two base portions are arranged in the width direction Z. Instead, there may be three or more base portions in the width direction Z.

In the above-described embodiments and modifications, two intermediate portions are arranged in the width direction Z. Instead, there may be three or more intermediate portions in the width direction Z.

If multiple base portions are provided in the width direction Z, the number of intermediate portions may be only one. If multiple intermediate portions are provided in the width direction Z, the number of base portions may be only one.

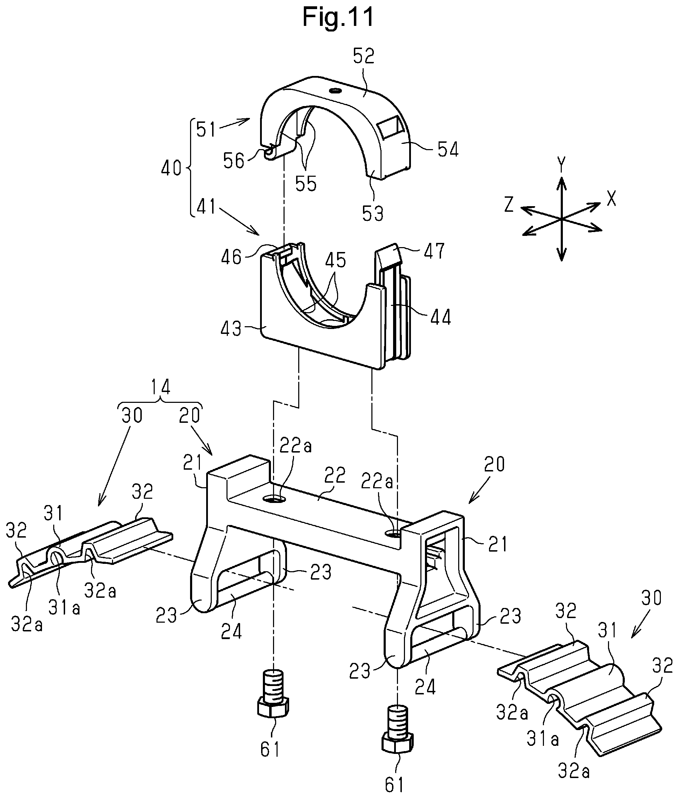

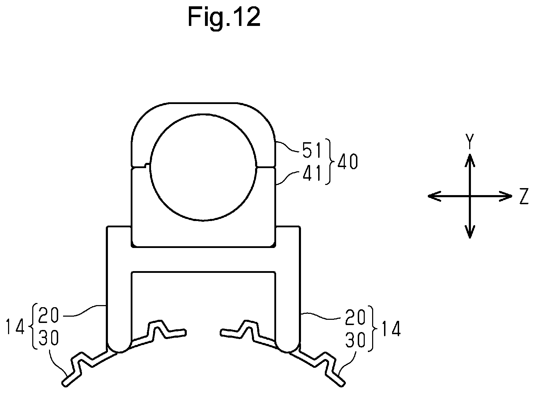

For example, as illustrated in a fourth modification shown in Figs. 11 and 12, the two base members 20 in the present embodiments may be integrated into a single base member 20. In the examples of Figs. 11 and 12, the single base member 20 is a one-piece component in which two base members 20 are integrated. That is, the single base member 20 includes the attachment 22, which has two holes 22a, and two bodies 21, which are respectively provided at the opposite ends of the attachment 22. If there are two base members 20, accurately positioning each base member 20 requires considerable effort. If there is only one base member 20, accurately positioning the base member 20 becomes easier. Additionally, fewer components improve work efficiency.

In the fourth modification, the base member 20 may be formed as a single base member 20 by joining two separate base members 20 to each other. For example, two separate base members 20 can be joined to each other using bolts or adhesive. Depending on the purpose, a single base member 20 may be split into two base members 20. That is, one base member 20 may be separable into two base members 20.

The bracket is not limited to the configurations of the above-described embodiments and modifications. That is, the bracket is not limited to a split type including the first member and the second member. Instead, the bracket may be of an integrated type including one member. In other words, the bracket may have any shape as long as it is fixed to the second object. For example, the bracket may be a plate member that supports part of the outer circumferential surface of the second object.

The distance between the base portions may be set not only based on the size of the bracket in the width direction but also based on the length and shape of the bracket.

The distance between the intermediate portions may be set not only based on the size of the first object in the width direction but also based on the length and shape of the first object.

### REFERENCE SIGNS LIST

- 10): Fixing Device
- 11): Fastener
- 12): Band
- 13): Buckle
- 14): Coupling Mechanism
- 20: Base Member (Base Portion)
- 21): Body
- 21a): Hole
- 22): Attachment
- 22a): Hole
- 22b): Internal Thread
- 23, 23A, 23B): Arm
- 24, 24A, 24B): Coupling Shaft
- 30): Transmission Member (Intermediate Portion)
- 31): First Protrusion
- 31a): First Groove
- 32): Second Protrusion
- 32a): Second Groove
- 40): Bracket
- 41): First Member
- 41a): Female Thread
- 42): Bottom Wall
- 42a): Hole
- 43): First Side Wall
- 44): Second Side Wall
- 45): First Support
- 46): Shaft Portion
- 47): First Engagement Portion
- 51): Second Member
- 52): Top Wall
- 53): First Side Wall
- 54): Second Side Wall
- 55): Second Support
- 56): Bearing
- 57): Second Engagement Portion
- 61): Bolt
- 62): Nut
- 70): Apparatus
- 71): First Object
- 72): Second Object
- 81): Screw

## Claims

1. A fixing device employed in an apparatus including an elongated first object and an elongated second object arranged along the first object, the fixing device fixing the first object to the second object by being attached to a bracket fixed to the second object, the fixing device comprising:
a fastener extending in a circumferential direction of an outer circumferential surface of the first object and designed to be fastened to the first object; and
a coupling mechanism that couples the bracket to the fastener, wherein
a direction that is orthogonal to an extending direction of the first object and an arrangement direction of the bracket and the fastener is referred to as a width direction,
the coupling mechanism includes:
a base portion attachable to the bracket, and
an intermediate portion arranged between the fastener and the first object, and
the base portion is one of multiple base portions arranged in the width direction, the intermediate portion is one of multiple intermediate portions arranged in the width direction, or both the base portions and the intermediate portions are arranged in the width direction.

2. The fixing device according to claim 1, wherein
the base portion is one base portion arranged in the width direction,
the intermediate portion is one of multiple intermediate portions arranged in the width direction, and
the intermediate portions are pivotally attached to the base portion.

3. The fixing device according to claim 1, wherein
the base portion is one of multiple base portions arranged in the width direction,
the intermediate portion is one of multiple intermediate portions arranged in the width direction, and
a distance between the base portions in the width direction and a distance between the intermediate portions in the width direction are adjustable.

4. The fixing device according to claim 2, wherein
the base portion is a base member including:
an attachment attachable to the bracket in a removable manner;
two arms spaced apart from each other in the extending direction; and
a coupling shaft that extends in the extending direction and couples the arms to each other, and
the intermediate portions are transmission members supported by the coupling shaft, the transmission members being configured to transmit a fastening force of the fastener to the outer circumferential surface of the first object.

5. The fixing device according to claim 1, wherein
the base portion includes an attachment that is attachable to the bracket in a removable manner, and
the base portion is configured to allow a position of the attachment to be changed relative to the intermediate portion in the arrangement direction.

6. A method for using the fixing device according to any one of claims 1 to 5, the method comprising:
setting, when the base portion is one of multiple base portions arranged in the width direction, a distance between the base portions in proportion to a size of the bracket in the width direction; and
setting, when the intermediate portion is one of multiple intermediate portions arranged in the width direction, a distance between the intermediate portions in proportion to a size of the first object in the width direction.
